# EUROPÄISCHE PATENTSCHRIFT

(11) **EP 0 509 010 B1**
(45) Veröffentlichungstag und Bekanntmachung des Hinweises auf die Patenterteilung: **31.08.1994**
(21) Anmeldenummer: 91901773.1
(22) Anmeldetag: 19.12.1990
(51) Int. Cl.: D01D 4/00, B29C 47/58

(54) **VERFAHREN UND VORRICHTUNG ZUM ABZIEHEN UND ABSPERREN EINER SCHMELZE INSBESONDERE AUS KUNSTSTOFF**
PROCESS AND DEVICE FOR DRAWING OFF AND BLOCKING OFF A MELT, ESPECIALLY OF PLASTIC MATERIAL
PROCEDE ET DISPOSITIF DE SOUTIRAGE ET D'ARRET D'ECOULEMENT D'UNE MATIERE EN FUSION, NOTAMMENT DE MATIERE PLASTIQUE

(30) Priorität: 05.01.1990 DE 4000218
(43) Veröffentlichungstag der Anmeldung: 21.10.1992
(73) Patentinhaber: Rieter Automatik GmbH, D-63757 Grossostheim (DE)
(72) Erfinder: KEILERT, Jürgen, D-8751 Kleinwallstadt (DE); NOGOSSEK, Alfred, D-8700 Würzburg (DE); ZANG, Harald, D-8752 Kleinostheim (DE)
(74) Vertreter: Bardehle, Heinz, Dipl.-Ing.
(86) Internationale Anmeldenummer: EP9002246
(87) Internationale Veröffentlichungsnummer: WO9109997

(56) Entgegenhaltungen:
- EP-A- 0 093 358
- DE-A- 2 820 329
- US-A- 3 836 313
- US-A- 4 108 588
- US-A- 4 437 827

## Beschreibung

Die Erfindung bezieht sich auf ein Verfahren und eine Vorrichtung zum Abziehen und Absperren einer Schmelze insbesondere aus Kunststoff mit einem als Schmelzeverteiler wirkenden mit einem Absperrventil versehenen beheizbaren Gießer, aus dem die Schmelze in eine Düsenplatte fließt, die Schmelze mittels Düsen in eine Mehrzahl von je einem Strang aufteilt, wobei die Temperatur von Gießer und Düsenplatte getrennt geregelt und zum Absperren der Schmelze das Absperrventil geschlossen und die Düsenplatte mit einem Deckel dicht abgeschlossen wird.

Ein gattungsgemäßes Verfahren und eine gattungsgemäße Vorrichtung sind aus der DE-A-2 820 329 bekannt.

Das Abschließen der Schmelze an den Düsenmündungen im Falle des Absperrens des Schmelzeflußes ist darum erforderlich, um von den Düsenmündungen her das Eindringen von Luft zu verhindern, das einen Oxydationsprozeß der Schmelze auslösen kann der zu einer unerwünschten chemischen Veränderung des Schmelzematerials führt. Der für dieses Abschließen verwendete Deckel wurde bisher üblicherweise an die Düsenplatte angeschraubt. Es ist dabei erforderlich, daß der Deckel mit erheblichem Druck an der Düsenplatte anliegt, um die erforderliche Dichtwirkung zu erzielen. Es hat sich dabei herausgestellt, daß offenbar aufgrund vorhandener Temperaturunterschiede ein Verziehen des Deckels unvermeidlich ist, was dazu führt, daß die Abdichtung der Düsenmündungen gegenüber dem Zutritt von Luft nur unvollständig erfolgt.

Der Erfindung liegt die Aufgabe zugrunde, die Abdichtung der Düsenmündungen im Falle des Absperrens des Schmelzeflußes zu verbessern. Erfindungsgemäß geschieht dies dadurch, daß zum Abziehen der Schmelze bei geöffnetem Absperrventil die Temperatur des Gießers und der Düsenplatte im wesentlichen auf gleichem Niveau gehalten wird, zum Absperren der Schmelze bei geschlossenem Absperrventil die Düsenplatte auf eine gerade oberhalb der Erstarrungstemperatur des Schmelzematerials liegende Temperatur gebracht wird, und daß mit dem Schließen des Absperrventils der auf eine erheblich unter der Erstarrungstemperatur liegende Temperatur gekühlte Deckel an die Düsenplatte angelegt wird, in die ein Rest der Schmelze fließt und in erstarrtem Zustand die Düsenmündungen dichtend abschließt.

Das während des Abziehens der Schmelze gleich gehaltene Temperaturniveau im Gießer und in der Düsenplatte wird beim Absperren des Schmelzeflußes so geändert, daß bei unverändert gehaltener Temperatur im Gießer demgegenüber das Temperaturniveau in der Düsenplatte abgesenkt wird, und zwar soweit, daß in der Düsenplatte eine gerade oberhalb der Erstarrungstemperatur des Schmelzematerials liegende Temperatur herrscht. Wenn dann der Schmelzematerial aufnehmende Deckel aufgrund seiner erheblichen Kühlung das Schmelzematerial in den erstarrten Zustand überführt, so kann das erstarrte Material die Düsenmündungen dichtend abschließen, und zwar auch dauerhaft, da wegen der erfolgten Absenkung der Temperatur in der Düsenplatte von dort her das vom Deckel gehaltene erstarrte Schmelzematerial nicht wieder zum Schmelzen gebracht werden kann. Es ergibt sich somit durch das erstarrte Schmelzematerial selbst ein sicherer Abschluß der Düsenmündungen, wodurch das Eintreten von Luft und damit von Sauerstoff in den Bereich der Schmelze mit Sicherheit vermieden wird. Diese Art der Abdichtung der Düsenplatte erlaubt es auch, den Deckel gewissermaßen nur an die Düsenplatte anzulegen, ohne das hierfür ein besonderer Druck erforderlich ist, da die erforderliche Abdichtung nicht vom Deckel selbst, sondern, wie gesagt, von dem erstarrten Schmelzematerial bewirkt wird.

Die Vorrichtung zur Durchführung des vorstehend beschriebenen Verfahrens beruht auf einem als Schmelzeverteiler wirkenden, mit einem Absperrventil versehenen beheizbaren Gießer, an den eine die Schmelze mittels Düsen auf eine Mehrzahl von je einem Strang aufteilende Düsenplatte angeschlossen ist, die mit einem Deckel dicht abschließbar ist. Vorteilhaft gestaltet man diese Vorrichtung so, daß die Düsenplatte und der Deckel je mit einem getrennten und einzeln regelbaren Heiz- bzw. Kühlsystem versehen ist, wobei zwischen Gießer und Düsenplatte eine Gießer und Düsenplatte dichtend verbindende Temperaturisolationslage eingesetzt ist, und daß der Deckel eine sich über die Düsenmündungen erstreckende Aussparung als Auffangbehälter für vom Deckel abgekühlte Schmelze aufweist.

Die Aussparung im Deckel, die als Auffangbehälter für die vom Deckel abgekühlte Schmelze dient, kann relativ flach ausgebildet sein, so daß sich eine relativ dünne Schicht von erstarrtem Schmelzematerial in der Aussparung ausbildet. Dies ist für den Effekt der Abdichtung völlig ausreichend. Dabei sorgt die zwischen Gießer und Düsenplatte vorgesehene Temperaturisolationslage dafür, daß die im Gießer herrschende Temperatur sich praktisch nicht auf die Temperatur in der demgegenüber abgekühlten Düsenplatte auswirken kann.

Wenn aus der Vorrichtung Schmelze wieder abgezogen werden soll, wird der Deckel von der Düsenplatte abgenommen. Je nach dem verwendeten Schmelzematerial kann der Deckel dabei in seiner Aussparung die erstarrte Schmelzeschicht mitnehmen. Für diesen Fall kann man den Deckel im Bereich seiner Aussparung mit einem den Deckel durchsetzenden Stößel zum Ausstoßen von erstarrtem Schmelzematerial versehen. Bei abgenommenem Deckel wird dann der Stößel vorgestoßen, wodurch die erstarrte Schmelzeschicht aus der Aussparung des Deckels herausfällt.

Den Deckel kann man von Hand anbringen bzw. abnehmen, es ist aber auch möglich, diesen Vorgang z. B. durch einen Schwenk- oder Schiebemechanismus auszuführen. Es ist dabei von besonderem Vorteil, daß der Deckel wegen seiner Kühlung für das Bedienungspersonal keine Gefahr bildet.

In den Figuren sind Ausführungsbeispiele der Erfindung dargestellt.
Es zeigen
Figur 1 in Prinzipdarstellung einen Schnitt durch einen Gießer mit Düsenplatte und an der Düsenplatte anliegenden Deckel,
Figur 2 eine abgewandelte Konstruktion mit einem gegenüber der Düsenplatte anschwenkbaren Deckel.

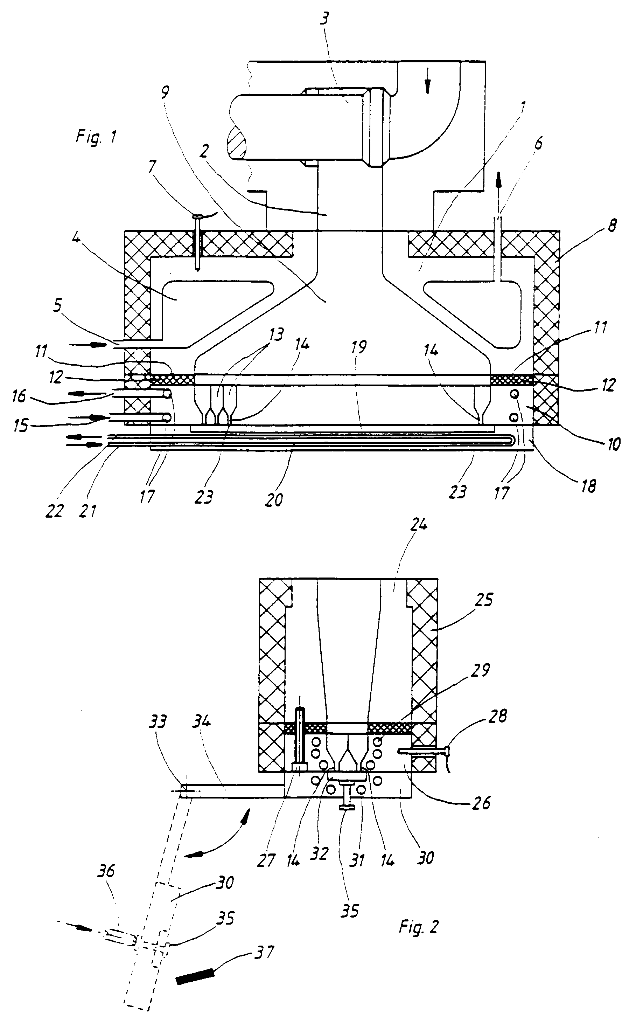

Figur 1 zeigt eine Vorrichtung zum Abziehen und Absperren einer Schmelze insbesondere aus Kunststoff mit dem Gießer 1, dem über die Zuleitung 2 eine Kunststoffschmelze zugeführt wird. In die Zuleitung 2 ist das Absperrventil 3 gelegt. Der Gießer 1 wird von einem diesen ringartig umgebenden Heizraum 4 umfaßt, in den über den Einlaß 5 eine Heizflüssigkeit einströmt und aus diesem über den Auslaß 6 abströmt. Die Temperatur des Gießers wird mittels des Temperaturfühlers 7 laufend gemessen. Der Gießer 1 ist zwecks Verhinderung eines Wärmeverlustes durch den kreuzschraffiert gezeichneten Isoliermantel 8 umgeben. Der Gießer besitzt den von der Schmelze ausgefüllten Innenraum 9, der sich in Richtung auf die anschließende Düsenplatte 10 entsprechend aufweitet.

An die ebene Stirnfläche 11 des Gießers 1 schließt sich die Temperaturisolationslage 12 an, die die Stirnseite 11 des Gießers mit der betreffenden Seite der Düsenplatte 10 dichtend verbindet. Die Temperaturisolationslage dient dazu, einen direkten Wärmeübergang vom Gießer 1 zur Düsenplatte 10 zu verhindern.

An die Temperaturisolationslage 12 schließt sich die Düsenplatte 10 an, die von Kanälen 13 durchsetzt ist, die in den Düsen 14 enden. Im Falle des Abziehens der Schmelze fließt diese durch den Innenraum 9 des Gießers 1 durch die Kanäle 13 und tritt an der Unterseite der Düsenplatte 10 aus den Düsen 14 aus. Die Düsenplatte 10 ist über den Zulauf 15 und den Ablauf 16 mit einem Heiz- bzw. Kühlmittelstrom verbunden, für den in der Düsenplatte 10 ringartig verlaufende Kanäle vorgesehen sind. Mittels des die Kanäle 17 durchströmenden Mediums wird die Düsenplatte 10 auf dem gewünschten Temperaturniveau gehalten.

An der Unterseite der Düsenplatte 10 liegt der Deckel 18 an, der sich mit seiner Aussparung 19 über alle Düsen 14 erstreckt. Bei der Darstellung in Figur 1 handelt es sich also um die Betriebsphase, in der Strom der Schmelze abgesperrt ist. Der Deckel 18 weist den sich über seine gesamte Länge erstreckenden Kanal 20 auf, der über den Einlaß 21 in den Auslaß 22 an einen Kühlmittelstrom angeschlossen ist. Mit Hilfe dieses Kühlmittels läßt sich der Deckel 18 auf einen wesentlich unterhalb der Temperatur der Düsenplatte 10 liegende Temperatur bringen.

Gemäß den eingangs beschriebenen Verfahrensschritten ist der Deckel 18 an die Düsenplatte 10 zusammen mit der Schließung des Absperrventils 3 angelegt worden, so daß nur ein Schmelzerest aus dem Innenraum 9 des Gießers 1 in die Aussparung 19 gelangen kann. Dieser Schmelzerest erstarrt aufgrund der erheblichen Abkühlung des Deckels 18 gegenüber der Düsenplatte 10, so daß sich ein Kuchen aus erstarrter Schmelze bildet, der im wesentlichen den Raum der Aussparung 19 ausfüllt und damit die Düsenmündungen 23 sicher und luftdicht abschließt. Damit nun der Deckel 18 nicht zuviel Warme von der Düsenplatte 10 erhält, ist diese auf eine gerade oberhalb der Erstarrungstemperatur des Schmelzematerials liegende Temperatur gebracht worden. Das innerhalb der Kanäle 13 und der Düsen 14 verbliebene Schmelzematerial kann damit nicht einfrieren, was einen späteren Prozeß des Abziehens der Schmelze erheblich verzögern würde, da hierzu die Kanäle 13 und die Düsen 14 zunächst von erstarrtem Schmelzematerial gereinigt werden müßten. Das Temperaturniveau in Gießer 1 bleibt dabei gegenüber dem Vorgang des Abziehens der Schmelze praktisch unverändert.

In der Figur 2 ist eine gegenüber der Figur 1 abgewandelte Gestaltung eines Gießers wiedergegeben, und zwar eine Vorrichtung mit zwei Reihen von Düsen 14. Der Gießer 24 ist hier langgestreckt ausgebildet und gegen Temperaturverlust durch den Isolationsmantel 25 geschützt. Die Düsenplatte 26 ist hier mittels der Schrauben 27 an die Wandung des Gießers 24 angeschraubt. Aus Gründen der Vereinfachung der Darstellung ist nur eine Schraube 27 eingezeichnet. Die Temperatur der Düsenplatte 26 wird durch den Temperaturfühler 28 gemessen. Die Düsenplatte 26 ist mit den Kanälen 29 und der Deckel 30 mit den Kanälen 31 versehen, die in der oben beschriebenen Weise für eine entsprechende Temperatureinstellung von Düsenplatte 26 und Deckel 30 sorgen. Die Beheizung des Gießers 24 ist hier aus Gründen der Vereinfachung der Darstellung weg gelassen.

Der Deckel 30 besitzt die unterhalb der Düsen 14 eingelassene Aussparung, die hier im Ausführungsbeispiel gemäß Figur 1 zur Aufnahme eines Restes des Schmelzematerials bei abgesperrtem Schmelzefluß dient, der in der Aussparung 32 erstarrende Schmelzekuchen dichtet dann sicher die Düsen 14 ab.

In der Figur wird dargestellt, wie der Deckel 30 an die Düsenplatte 26 herangeführt wird. Dies geschieht hier mittels des Gelenkes 33, in dem der Arm 34 gelagert ist, an dem die Düsenplatte 30 befestigt ist. In den Deckel 30 ist der Stößel 35 eingelassen, der dazu dient, einen in der Ausnehmung 32 sitzenden Kuchen aus erstarrtem Schmelzematerial heraus zu drücken. Dies ist in der Figur 2 im Bereich der strichpunktierten Darstellung des Deckels 30 gezeigt, die von der Düsenplatte 26 weggeschwenkte Lage des Deckels 30 zeigt. Der Stößel 35 ist hier in einer vorgeschobenen Position gezeichnet, bewirkt durch den Stift 36. Der Stößel 35 stößt dabei den Schmelzekuchen 37 aus.

Es wird noch darauf hingewiesen, daß die in den Figuren 1 und 2 dargestellten Heiz- bzw. Kühlkanäle, letztere im Bereich des Deckels 18 bzw. 30, auch durch irgend ein anderes Heizmedium, z. B. eine elektrische Heizung ersetzt werden können Zum Zwecke der Kühlung müßte dann die Heizung ganz abgeschaltet werden, wozu gegebenenfalls noch eine Grundkühlung mit einem Kühlmedium gehört.

## Patentansprüche

1. Verfahren zum Abziehen und Absperren einer Schmelze insbesondere aus Kunststoff mit einem als Schmelzeverteiler wirkenden, mit einem Absperrventil (3) versehenen, beheizbaren Gießer (1, 24) , aus dem die Schmelze in eine Düsenplatte (10, 26) fließt, die die Schmelze mittels Düsen (14) in eine Mehrzahl von je einem Strang aufteilt, wobei die Temperatur von Gießer (1, 24) und Düsenplatte (10, 26) getrennt geregelt und zum Absperren der Schmelze das Absperrventil (3) geschlossen und die Düsenplatte (10, 26) mit einem Deckel (18, 30) dicht abgeschlossen wird, **dadurch gekennzeichnet,** daß zum Abziehen der Schmelze bei geöffnetem Absperrventil (3) die Temperatur des Gießers (1) und der Düsenplatte (10, 26) im wesentlichen auf gleichem Niveau gehalten wird, zum Absperren der Schmelze bei geschlossenem Absperrventil (3) die Düsenplatte (10, 26) auf eine gerade oberhalb der Erstarrungstemperatur des Schmelzematerials liegende Temperatur gebracht wird, und daß mit dem Schließen des Absperrventils (3) der auf eine erheblich unter der Erstarrungstemperatur liegende Temperatur gekühlte Deckel (18, 30) an die Düsenplatte (10, 26) angelegt wird, in die ein Rest der Schmelze fließt und in erstarrtem Zustand die Düsenmündungen (23) dichtend abschließt.

2. Vorrichtung zur Durchführung des Verfahrens nach Anspruch 1 mit einem als Schmelzeverteiler wirkenden, mit einem Absperrventil (3) versehenen beheizbaren Gießer (1, 24), an den eine die Schmelze mittels Düsen (14) auf eine Mehrzahl von je einem Strang aufteilende Düsenplatte (10, 26) angeschlossen ist, die mit einem Deckel (18, 30) dicht abschließbar ist, **dadurch gekennzeichnet,** daß die Düsenplatte (10, 26) und der Deckel (18, 30) je mit einem getrennten und einzeln regelbaren Heiz- bzw. Kühlsystem (4, 17, 20, 29, 31) versehen ist, wobei zwischen Gießer (1, 24) und Düsenplatte (10, 26) eine Gießer (1, 24) und Düsenplatte (10, 26) dichtend verbindende Temperaturisolationslage (12) eingesetzt ist, und daß der Deckel (18, 30) eine sich über die Düsenmündungen (23) erstreckende Aussparung (19, 32) als Auffangbehälter für vom Deckel (18, 30) abgekühlte Schmelze aufweist.

3. Vorrichtung nach Anspruch 2, **dadurch gekennzeichnet,** daß der Deckel (18, 30) im Bereich seiner Aussparung (19, 32) mit einem den Deckel (18, 30) durchsetzenden Stößel (35) zum Ausstoßen von erstarrtem Schmelzematerial versehen ist.

## Claims

1. Process for drawing off and blocking off a melt, especially of plastic material, with a heatable melter (1, 24) provided with a blocking valve (3) and acting as a melt distributor, from which the melt flows into a nozzle plate (10, 26) which divides the melt by means of nozzles (14) into a plurality of strands, the temperatures of the melter (1, 24) and the nozzle plate (10, 26) being regulated separately and the blocking valve (3) being closed and the nozzle plate (10, 26) being tightly sealed off by a cover (18, 30) in order to block off the melt, characterised in that, in order to draw off the melt when the blocking valve (3) is open, the temperatures of the melter (1) and the nozzle plate (10, 26) are kept substantially at the same level, and in order to block off the melt when the blocking valve (3) is closed, the nozzle plate (10, 26) is brought to a temperature just above the solidification temperature of the melt material, and that when the blocking valve (3) is closed, the cover (18, 30) cooled to a temperature considerably below the solidification temperature is laid on the nozzle plate (10, 26) into which residual melt flows and seals off the nozzle apertures (23) in the solidified state.

2. Device for carrying out the process according to claim 1, with a heatable melter (1, 24) provided with a blocking valve (3) and acting as a melt distributor, to which a nozzle plate (10, 26) dividing the melt by means of nozzles (14) into a plurality of strands is connected, wherein said nozzle plate (10, 26) can be tightly sealed off by a cover (18, 30), characterised in that the nozzle plate (10, 26) and the cover (18, 30) are each provided with a separate and individually controllable heating or cooling system (4, 17, 20, 29, 31), a thermally insulating layer (12) connecting the melter (1, 24) and the nozzle plate (10, 26) in a sealed manner being inserted between the melter (1, 24) and the nozzle plate (10, 26), and that the cover (18, 30) has a recess (19, 32) extending over the nozzle apertures (23) as a receiver for melt cooled by the cover (18, 30).

3. Device according to claim 2, characterised in that the cover (18, 30) is provided in the region of its recess (19, 32) with a ram (35) traversing the cover (18, 30) for expelling solidified melt material.

## Revendications

1. Procédé destiné à extraire et à bloquer une masse fondue, en particulier en matière synthétique, comportant un dispositif de coulée (1, 24) pourvu d'une vanne d'arrêt (3) pouvant être chauffé et faisant office de distributeur de la masse fondue, duquel la masse fondue s'écoule dans une plaque à buses (10, 26) qui répartit la masse fondue en une multitude de cordons individuels au moyen de buses (14), étant précisé que la température de dispositif de coulée (1, 24) et de la plaque à buses (10, 26) est régulée de façon distincte, et que, pour bloquer la masse fondue, la vanne d'arrêt (3) est fermée et la plaque à buses (10, 26) est hermétiquement obturée par un couvercle (18, 30), caractérisé en ce que, pour extraire la masse fondue lorsque la vanne d'arrêt (3) est ouverte, les températures du dispositif de coulée (1) et de la plaque à buses (10, 26) sont maintenues sensiblement au même niveau, en ce que pour bloquer la masse fondue lorsque la vanne d'arrêt (3) est fermée, la plaque à buses (10, 26) est portée à une température située juste au-dessus de la température de solidification de la masse fondue, et en ce que, lors de la fermeture de la vanne d'arrêt (3) le couvercle (18, 30), refroidi à une température nettement inférieure à la température de solidification, est appliqué contre la plaque à buses (10, 26) dans laquelle s'écoule un reste de la masse fondue, qui, à l'état solidifié, obture de façon étanche les orifices (23) des buses.

2. Dispositif destiné à la mise en oeuvre du procédé selon la revendication 1, comportant un dispositif de coulée (1, 24) pourvu d'une vanne d'arrêt (3) pouvant être chauffé et faisant office de distributeur de la masse fondue, auquel est raccordée une plaque à buses (10, 26) répartissant la masse fondue en une multitude de cordons individuels au moyen de buses (14), laquelle est hermétiquement obturable par un couvercle (18, 30), caractérisé en ce que la plaque à buses (10, 26) et le couvercle (18, 30) sont respectivement pourvus d'un système de chauffage et de refroidissement (4, 17, 20, 29, 31) distinct et pouvant être régulé individuellement, une couche d'isolation thermique (12) reliant de façon étanche le dispositif de coulée (1, 24) et la plaque à buses (10, 26) étant disposée entre le dispositif de coulée (1, 24) et la plaque à buses (10, 26), et en ce que le couvercle (18, 30) comporte un évidement (19, 32) s'étendant sur les orifices (23) des buses et faisant office de collecteur de réception pour la masse fondue refroidie par le couvercle (18, 30).

3. Dispositif selon la revendication 2, caractérisé en ce qu'au niveau de son évidement (19, 32), le couvercle (18, 30) est équipé d'un poussoir (35) traversant le couvercle (18, 30) et destiné à éjecter la masse fondue solidifiée.
